# FASCICULE DE BREVET EUROPEEN

(11) **EP 3 516 353 B1**
(45) Date de publication et mention de la délivrance du brevet: **25.05.2022**
(21) Numéro de dépôt: 17784364.6
(22) Date de dépôt: 22.09.2017
(51) Int. Cl.: G01J 3/28, G01J 3/36, H04N 5/33

(54) **PROCÉDÉ D'AMÉLIORATION DES CAPACITÉS DE DÉTECTION D'UN SYSTÈME D'IMAGERIE MULTISPECTRALE**
VERFAHREN ZUR VERBESSERUNG DER DETEKTION VON KAPAZITÄTEN EINES MULTISPEKTRALEN BILDGEBUNGSSYSTEMS
METHOD FOR IMPROVING THE DETECTION CAPACITIES OF A MULTISPECTRAL IMAGING SYSTEM

(30) Priorité: 26.09.2016 FR 1659002
(43) Date de publication de la demande: 31.07.2019
(73) Titulaire: Saphir Investissement, 31670 Labège (FR)
(72) Inventeur: BRU, Richard, 31670 Labège (FR)
(74) Mandataire: Vuillermoz, Bruno
(86) Numéro de dépôt international: PCT/FR2017/052543
(87) Numéro de publication internationale: WO 2018/055300

(56) Documents cités:
- EP-A1- 2 871 452
- US-A1- 2014 211 199

## Description

### Domaine Technique

La présente invention se rapporte à un procédé d'amélioration des capacités de détection d'un système d'imagerie multispectrale. Elle trouve des applications en particulier dans le domaine de l'imagerie spectrale hautement résolue et de grande sensibilité dont l'une des utilisations est, par exemple, la détection et l'imagerie en temps réel de nuages de gaz.

### Arrière-plan Technologique

L'une des valeurs importantes pour déterminer les performances d'un système de détection ou de mesure par imagerie spectrale est sa résolution spectrale c'est-à-dire son aptitude à discriminer le signal mesuré pour deux longueurs d'onde très proches.

Une approche courante pour obtenir une bonne résolution spectrale consiste à utiliser une technique de balayage en longueur d'onde dans laquelle la mesure est réalisée longueur d'onde après longueur d'onde. C'est notamment le cas, dans le domaine infrarouge, de la technique dite de la spectroscopie par transformée de Fourier infrarouge (en anglais Fourier Transformed InfraRed FTIR).

Cependant, ce type d'approche implique souvent l'utilisation de dispositifs d'imagerie encombrants et ne permettant pas l'acquisition rapide d'images pour tout le domaine spectral visé. Or, lorsque ces dispositifs sont destinés à certaines mesures, comme par exemple l'imagerie thermique de gaz en temps réel, la compacité des dispositifs et surtout leur rapidité d'acquisition impactent directement leurs performances.

Une approche alternative, proposée pour réaliser des mesures de rayonnement électromagnétique combinant un taux de répétition élevé des acquisitions successives et une bonne compacité du dispositif de mesure, est l'implémentation d'une technique de mesure dite multispectrale. Les dispositifs reposant sur cette technique utilisent en général une matrice de filtres en longueur d'onde ou un ensemble de détecteurs sensibles aux rayonnements à différentes longueurs d'onde pour faire l'acquisition simultanée du signal de mesure sur un large domaine spectral.

Cette technique présente l'avantage de permettre d'extraire rapidement l'information souhaitée à différentes longueurs d'onde tout en étant compatible avec des dispositifs d'imagerie connus offrant une bonne résolution spatiale tels que les microscopes. De plus, en faisant appel à des détecteurs spécifiques, il est possible d'obtenir des dispositifs d'imagerie spectrale très compacts. C'est, par exemple, le cas de certains dispositifs d'imagerie dans le domaine infrarouge utilisant un détecteur sensible au rayonnement infrarouge du type bolomètre.

Une caméra d'imagerie multispectrale destinée à la mesure dans le domaine infrarouge reprend ces caractéristiques. Elle permet donc l'acquisition rapide d'images résolues spatialement et spectralement. La sensibilité de ce type de caméra (c'est-à-dire son aptitude à détecter un rayonnement très faible) est une propriété clé puisqu'elle détermine notamment sa capacité à détecter/imager un objet potentiellement invisible pour un système moins sensible.

Au-delà de la sensibilité intrinsèque du détecteur utilisé, plusieurs facteurs limitent cette sensibilité. Parmi eux, l'auto-émission des composants de la caméra (leur émission de type corps noir) peut, par exemple, modifier le seuil à partir duquel il est possible de détecter un rayonnement et donc la sensibilité du système d'imagerie. Ce problème est généralement compensé par une calibration appropriée du détecteur permettant de tenir compte de l'auto-émission des composants de la caméra et de sa possible dérive pour la retrancher au signal mesuré. La précision d'une telle calibration détermine *in fine* le niveau de performance d'une telle caméra et de ses capacités de détection.

Les méthodes de calibration usuelles, telles que la calibration radiométrique basée sur l'utilisation de deux sources présentant une émission différente, permettent d'obtenir de bons résultats.

Cependant, lorsque la calibration est obtenue via l'utilisation de composants ne s'intégrant pas directement au système d'imagerie, elle peut être limitée en précision. Ceci peut notamment provenir d'une plus grande difficulté à envoyer un rayonnement uniforme sur l'intégralité de la surface du détecteur du système d'imagerie qui servira de valeur référence dans le processus de calibration.

De plus, l'incapacité à intégrer dans un dispositif compact le ou les composants nécessaires à la calibration, rend aussi plus difficile le fait d'implémenter la méthode dite de la détection synchronisée contribuant à l'amélioration de la sensibilité de mesure.

Cette méthode permet, dans un système de détection optique en général, d'améliorer le ratio entre le signal que l'on cherche à mesurer et le bruit parasite généré par l'environnement extérieur (on parle du rapport signal sur bruit) en modulant la position d'un composant du système à une fréquence donnée et en détectant le signal optique autour de cette fréquence. Cette amélioration du rapport signal sur bruit entraîne directement une amélioration de la sensibilité de mesure du système. Le document US 2014/211199 A1 décrit un système de détection multispectral bi télécentrique comprenant une pupille placée dans le plan focal de deux lentilles ainsi qu'une matrice de micro lentilles. Le document EP 2 871 452 A1 concerne une méthode de détection spectrale du rayonnement provenant d'un gaz, comprenant une étape de calibration de la longueur d'onde utilisant le positionnement, l'une après l'autre, de deux fenêtres spectrales dans la pupille.

### Résumé de l'Invention

Partant de ce état de fait et d'un cahier des charges préétabli, la demanderesse a imaginé un nouveau procédé permettant d'améliorer les capacités de détection d'un système d'imagerie multispectrale en intégrant à la fois une calibration du système d'imagerie multispectrale comprenant un éclairage uniforme du détecteur du système et l'implémentation d'une gigue contrôlée sur l'un des composants du système pour permettre de réaliser une détection synchronisée du signal mesuré. Dans ce système d'imagerie multispectrale du type de celui intégrant un système d'imagerie bi-télécentrique comprenant, suivant une direction longitudinale, les composants successifs suivants :
- une première lentille,
- une pupille située dans le plan focal arrière de ladite première lentille,
- une seconde lentille dont la distance focale coïncide avec la position de ladite pupille,
- une matrice de microlentilles, de distances focales identiques, située dans le plan focal arrière de ladite seconde lentille,
- une matrice de filtres spectraux associée à ladite matrice de microlentilles,
- et un détecteur sensible au rayonnement à détecter et situé dans le plan focal arrière de ladite matrice de microlentilles,
le procédé d'amélioration de détection de l'invention comprend :
- une étape de calibration du système d'imagerie multispectrale, dans laquelle est utilisée une cible de calibration, placée au niveau de la susdite pupille, ladite cible de calibration comprenant au moins deux fenêtres, de dimensions transversales au moins égales à celles de ladite pupille, lesdites fenêtres pouvant être placées alternativement devant ladite pupille dudit système d'imagerie multispectrale, de manière à ce que chaque fenêtre couvre l'ensemble de l'ouverture de ladite pupille, ladite première fenêtre contenant un premier panneau duquel provient un rayonnement à une première longueur d'onde située dans le domaine spectral mesurable par ledit détecteur et ladite seconde fenêtre contenant un second panneau duquel provient un rayonnement à une seconde longueur d'onde située dans le domaine spectral mesurable par ledit détecteur,
- et une étape d'implémentation d'une gigue contrôlée, c'est-à-dire d'un déplacement d'amplitude et de fréquence fixe, d'au moins un des composants dudit système d'imagerie multispectrale, afin d'effectuer une détection synchronisée sur le signal détecté par le susdit détecteur, d'un rayonnement ayant traversé le système d'imagerie multispectrale.

Avec cette étape de calibration du système d'imagerie multispectrale et cette étape d'implémentation d'une gigue contrôlée, ce procédé permet donc une amélioration des capacités de détection d'un système d'imagerie multispectrale.

Dans d'autres modes de réalisation de l'invention, pris isolément ou en combinaison :
- la cible de calibration de l'étape de calibration du système d'imagerie multispectrale comprend une troisième fenêtre ouverte de manière à laisser passer, sur toute sa surface, sans y apporter de modification, tout rayonnement la traversant ;
- la cible de calibration de l'étape de calibration du système d'imagerie multispectrale comprend une matrice de filtres en longueur d'onde ;
- les fenêtres de la cible de calibration de l'étape de calibration du système d'imagerie multispectrale ont des dimensions transversales supérieures à celles de la pupille dudit système d'imagerie ;
- la calibration de l'étape de calibration du système d'imagerie multispectrale est une calibration radiométrique ;
- la matrice de filtres spectraux dudit système d'imagerie multispectrale est accolée à la matrice de microlentilles ;
- les deux panneaux de l'étape de calibration desquels proviennent des rayonnements respectivement à une première et à une deuxième longueurs d'onde font provenir lesdits rayonnements de manière uniforme sur toute leur surface ;
- les deux panneaux de l'étape de calibration desquels proviennent des rayonnements respectivement à une première et à une deuxième longueurs d'onde sont des filtres en longueur d'onde laissant passer respectivement ladite première longueur d'onde et ladite deuxième longueur d'onde ;
- les deux panneaux de l'étape de calibration desquels proviennent des rayonnements respectivement à une première et à une deuxième longueurs d'onde sont des émetteurs émettant respectivement un rayonnement à ladite première longueur d'onde et à ladite deuxième longueur d'onde ;
- le détecteur sensible au rayonnement à détecter et situé dans le plan focal arrière de ladite matrice de microlentilles est un détecteur sensible au rayonnement infrarouge ;
- la cible de calibration de l'étape de calibration est intégrée à un support mobile permettant de placer chacune de ses fenêtres alternativement devant la pupille dudit système d'imagerie multispectrale, par translation suivant un axe orthogonal à l'axe longitudinal du système d'imagerie multispectrale ;
- le déplacement d'au moins un des composants du système d'imagerie multispectrale de l'étape d'implémentation de la gigue contrôlée est obtenu par l'intégration d'un support mécanique pour ledit élément dont la position peut être modulée par effet piézoélectrique ;
- le déplacement de l'étape d'implémentation d'une gigue contrôlée d'au moins un des composants du système d'imagerie multispectrale est effectué sur la première lentille dudit système d'imagerie ;
- le déplacement de l'étape d'implémentation d'une gigue contrôlée d'au moins un des composants du système d'imagerie multispectrale est effectué sur la deuxième lentille dudit système d'imagerie ;
- le déplacement de l'étape d'implémentation d'une gigue contrôlée d'au moins un des composants du système d'imagerie multispectrale est effectué sur la matrice de microlentilles dudit système d'imagerie ;
- le déplacement de l'étape d'implémentation d'une gigue contrôlée d'au moins un des composants du système d'imagerie multispectrale est effectué sur le détecteur dudit système d'imagerie.

### Brève Description des Dessins

D'autres caractéristiques et avantages de l'invention apparaîtront plus clairement à la lecture de la description qui suit de modes de réalisation non limitatifs, en référence aux dessins annexés dans lesquels :
- la figure 1 est un schéma optique simplifié décrivant un mode de réalisation du système d'imagerie multispectrale;
- la figure 2 est une illustration d'un mode de réalisation d'une cible de calibration permettant la réalisation d'une étape de calibration conforme à l'invention.
- la figure 3 est une photographie du dessus d'un système d'imagerie multispectrale coupé suivant un plan parallèle au sol et intégrant une cible de calibration conforme à l'invention.

### Description détaillée de modes de réalisation

Le procédé de la présente invention s'applique à un système d'imagerie multispectrale. Selon une mise en œuvre de ce procédé, ce système d'imagerie multispectrale intègre un système optique appelé système bi-télécentrique pour former, par exemple, une caméra compacte.

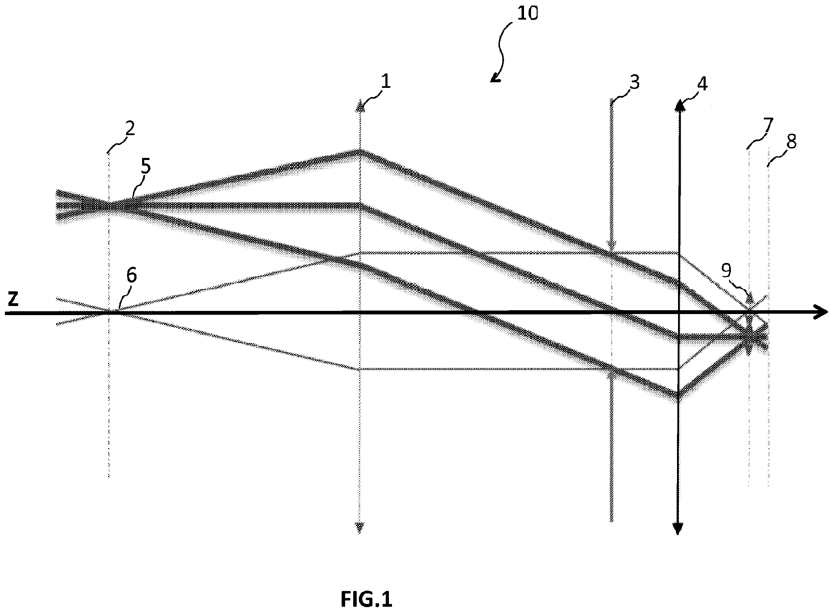

La figure 1 est un schéma d'optique géométrique illustrant de manière simplifiée un mode de réalisation d'un système d'imagerie multispectrale conforme à l'invention et auquel il est possible d'intégrer une cible de calibration permettant la réalisation d'une étape de calibration conforme à l'invention. Tel qu'illustré, ce système d'imagerie multispectrale comporte un ensemble de composants disposés suivant un axe longitudinal Z, centrés sur cet axe, et répartis successiement comme suit.

Une première lentille 1 est située à une distance égale à sa distance focale, d'un objet à imager situé dans le plan objet 2 représenté par une ligne en pointillés. Les rayons lumineux provenant du plan objet 2 et passant par la lentille sont renvoyés à l'infini, c'est-à-dire que tous les rayons issus d'un même point sur le plan objet 2 sortent de manière parallèle de la lentille 1 et avec un angle par rapport à l'axe longitudinal Z déterminé par leur position sur le plan objet 2.

Les traits pleins épais 5 et les traits pleins fins 6 représentent respectivement les trajectoires suivies par trois rayons provenant d'un même point au sein du plan objet 2. On peut noter que, dans un premier temps, les rayons divergent depuis l'objet vers la lentille 1 avant de se propager parallèlement à l'issue de cette lentille 1.

Une pupille 3 est située dans le plan focal arrière de la première lentille 1. Cette position de la pupille 3 caractérise un système télécentrique (connu de l'homme du métier) et permet que la magnification du système d'imagerie soit indépendante de la taille de l'objet imagé.

Une seconde lentille 4 est située derrière la pupille 3 à une distance égale à sa distance focale. Après avoir traversés cette lentille, les rayons lumineux convergent au niveau du plan focal arrière 7 de la lentille 4.

Il est à noter qu'on parle ici de rayons lumineux de manière simplifiée en sachant que ce type de système peut en principe s'appliquer à tout rayonnement électromagnétique quel que soit le domaine spectral concerné.

Une matrice de micro-lentilles 9 est positionnée pour coïncider avec le plan focal arrière 7 de la deuxième lentille 4. Une matrice de micro-filtres en longueur d'onde peut être associée à la matrice de micro-lentilles. Celle-ci permet alors d'associer un micro-filtre à une micro-lentille pour filtrer en longueur d'onde, les rayons traversant la micro-lentille.

Les rayons provenant d'une position donnée du plan objet 2, après avoir traversé la lentille 1, la pupille 3 et la lentille 4 sont donc imagés sur la matrice de micro-lentilles qui échantillonne une partie du plan objet 2. C'est-à-dire, qu'à travers chaque micro-lentille de la matrice 9 passent les rayons provenant d'une partie différente du plan objet 2 dans lequel se situe l'objet à imager ; ceci, sans aucun recouvrement des zones imagées. Une partie du plan objet n'est jamais « vue » par plusieurs micro-lentilles et/ou plusieurs micro-filtres en longueur d'onde en même temps.

Toutes les micro-lentilles de la matrice 9 ont la même distance focale et les distances focales de ces micro-lentilles sont toutes situées sur le plan 8. Le détecteur (qui peut être par exemple un bolomètre refroidi ou fonctionnant à température ambiante) sensible au rayonnement à détecter (qui peut par exemple être un rayonnement infrarouge dont les longueurs d'onde sont comprises entre 1µm et 101µm) est situé sur le plan 8. De cette manière, tous les rayons lumineux ayant traversé l'ensemble du système sont détectés/collectés par le détecteur sensible au rayonnement à détecter.

L'invention implique notamment une étape de calibration faisant appel à une cible de calibration. En plaçant une cible de calibration au niveau de la pupille 3 de façon à ce que l'intégralité de la pupille soit couverte par la cible, il est alors possible de s'assurer que tout le rayonnement collecté par le détecteur a :
- soit été émis par la cible,
- soit traversé la cible.

Il s'agit donc d'utiliser des panneaux dont la surface est supérieure à celle de la pupille 3 et qui sont placés au niveau de cette dernière. Ces panneaux peuvent être des émetteurs dont la longueur d'onde du rayonnement émis dépend de la température, c'est-à-dire des émetteurs de type corps noir. Ces panneaux peuvent aussi être des filtres en longueur d'onde dont le rôle est de ne laisser passer qu'une seule longueur d'onde d'un rayonnement issu du plan objet 2 et qui peut être large spectralement à l'origine. Dans les deux cas, le rayonnement qui provient d'un panneau est très fin spectralement (assimilé à un rayonnement monochromatique) et présente la même longueur d'onde, quel que soit son point d'origine sur la surface du panneau. En d'autres termes, les caractéristiques d'émission ou de filtrage d'un panneau utilisé dans la cible de calibration doivent être uniformes sur toute la surface du panneau.

La méthode de calibration proposée (qui peut être par exemple une calibration dite radiométrique) repose sur le fait d'éclairer le détecteur du système d'imagerie successivement avec un rayonnement à deux longueurs d'ondes différentes. Il s'agit d'une calibration à deux points. La cible de calibration utilisée permet donc de placer alternativement au moins deux panneaux, à deux longueurs d'onde différentes devant la pupille du système d'imagerie multispectrale 10.

Il est à noter que l'amélioration associée à cette calibration repose sur le fait que le type de cible de calibration utilisée et son positionnement dans le système d'imagerie 10 permettent d'obtenir un éclairage uniforme du détecteur.

De plus, il est aussi possible de chauffer un ou plusieurs panneau(x) émetteur(s) pour obtenir un rayonnement d'émission à différente températures donc à différentes longueurs d'onde. En exploitant cet effet, la calibration peut tenir compte d'éventuelles non-linéarités associées à la réponse du détecteur du système d'imagerie en fonction de la longueur d'onde. Avantageusement, cela permet aussi de contrôler la stabilité du procédé de calibration en fonction d'éventuelles dérives en température du système.

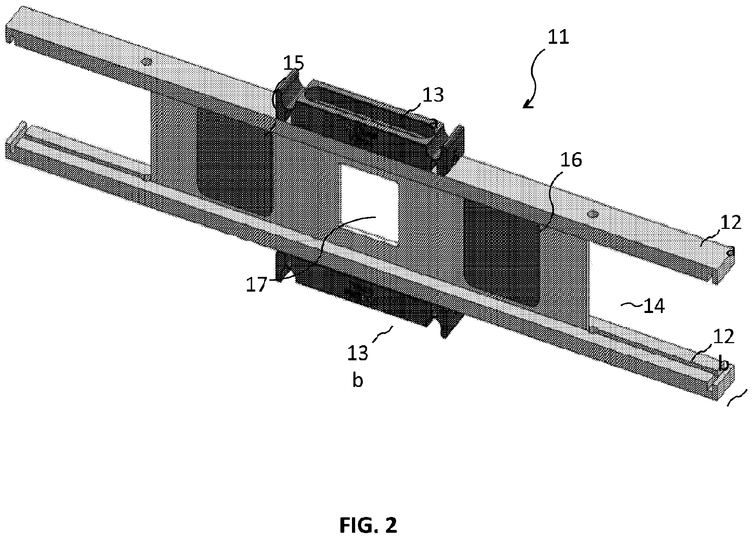

La figure 2 illustre un exemple de mode de réalisation d'une cible de calibration 11 destiné à permettre une étape de calibration conforme à celle de l'invention proposée.

Dans cet exemple, deux rails 12a et 12b comportant respectivement deux systèmes de fixations 13a et 13b leur permettant de s'intégrer à un dispositif optique monté sur des rails cylindriques, accueillent en leur sein un panneau de support 14. Le panneau de support 14 est ouvert de trois fenêtres. Il est à noter que l'étape de calibration de l'invention proposée peut être réalisée avec deux fenêtres.

Dans chacune des trois fenêtres du panneau de support 14 sont situés un premier panneau de filtrage ou d'émission 15 à une première longueur d'onde, un second panneau de filtrage ou d'émission 16 à une seconde longueur d'onde et, la troisième fenêtre centrale 17 est laissée vide. Il est toutefois possible, suivant un autre mode de réalisation, d'intégrer à cette fenêtre 17 un filtre ou une matrice de filtres en longueur d'onde.

Le panneau de support 14 peut coulisser au sein des rails 12a et 12b de manière à placer en leur centre alternativement, la fenêtre vide 17 ou l'une des fenêtres contenant l'un des deux panneaux 15 et 16. De cette façon, chaque fenêtre peut être placée en amont et en vis-à-vis de la pupille 3 du système d'imagerie décrit sur le dessin de la figure 1. D'autres supports mobiles, comme par exemple une roue peuvent être envisagés pour permettre de placer alternativement les différents panneaux nécessaires à la calibration devant la pupille. Dans tous les cas, les dimensions transverses des panneaux et leur position par rapport à la pupille 3 doivent permettre que tous les rayons atteignant le détecteur du système d'imagerie aient traversé ou aient été émis par ces panneaux.

L'invention implique aussi une étape d'implémentation d'une gigue contrôlée, c'est-à-dire l'implémentation d'un déplacement à une fréquence donnée et à une amplitude donnée d'un des composants du système d'imagerie. Par cette modulation de la position d'un composant que traverse le rayonnement à détecter, l'amplitude du signal mesuré par le détecteur est elle aussi modulée. Par conséquence, il est possible d'effectuer une détection synchronisée du signal mesuré. Cela signifie qu'il est possible de filtrer en fréquence le signal mesuré pour extraire uniquement le signal situé dans une fenêtre fréquentielle limitée autour de la fréquence de modulation de la position d'un des composants du système. Le bruit de la mesure, c'est-à-dire le signal parasite ne correspondant pas au signal que l'on souhaite détecter est réduit du fait de ce filtrage. Ceci permet d'obtenir un meilleur rapport signal sur bruit (signal que l'on souhaite mesurer sur bruit parasite).

Les composants optiques décrit sur le dessin de la figure 1 que sont la lentille 1, la lentille 4, la matrice de micro-lentilles 9 ou le détecteur peuvent ainsi être choisis pour l'implémentation d'un déplacement. Par exemple, il est possible de monter une lentille sur un support déplaçable par effet piézoélectrique permettant de translater ladite lentille sur un axe perpendiculaire à l'axe Z du système d'imagerie 10 en appliquant un signal électrique sinusoïdal à une fréquence déterminée.

Avantageusement, le déplacement peut aussi être réalisé sur la cible de calibration décrite précédemment et intégrée au dispositif du système d'imagerie 10. L'intégration de cette cible permet donc à la fois de réaliser une étape de calibration en deux points offrant un éclairage uniforme du détecteur mais aussi de conserver l'aspect compact du système d'imagerie sur lequel on réalise aussi une étape d'implémentation d'une gigue contrôlée pour effectuer une détection synchronisée.

Finalement, la meilleure calibration obtenue grâce à l'intégration d'une cible de calibration spécifique et l'utilisation d'une détection synchronisée permettant d'améliorer le rapport signal sur bruit conduisent à une amélioration globale de la sensibilité de détection du système d'imagerie multispectrale.

De plus, l'implémentation d'une gigue contrôlée permet aussi de corriger les effets d'aliasing sur le signal détecté en permettant un sur-échantillonage du signal mesuré et d'améliorer le facteur de remplissage de la zone de détection du détecteur utilisé dans le système d'imagerie multispectrale.

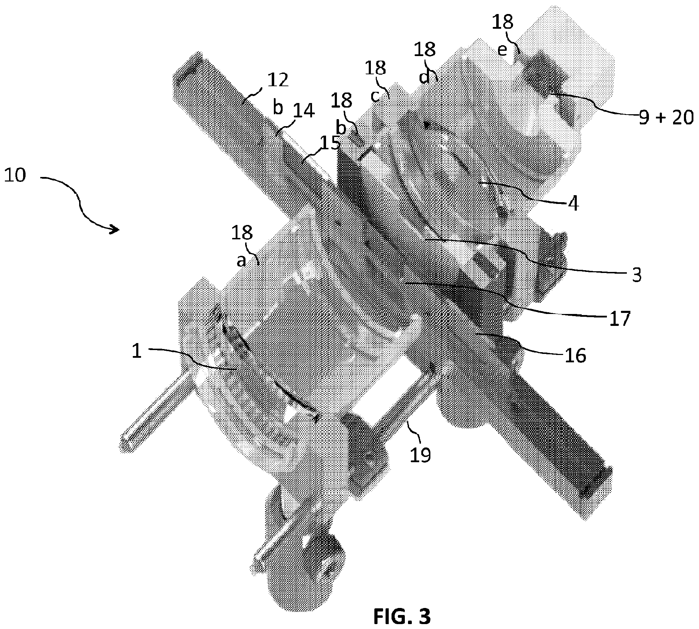

La figure 3 est une photographie vue du dessus d'un mode de réalisation du système d'imagerie intégrant une cible de calibration conforme à l'invention. Toutes les pièces optiques et mécaniques sont coupées suivant un plan parallèle au sol et passant par l'axe longitudinal sur lequel sont centrés tous les composants du système.

Les éléments des figures 1 et 2 apparaissent de nouveau sur le dessin de la figure 3 avec en particulier une première lentille 1, un panneau de support 14 inclus dans la partie du rail apparente 12b et comportant trois fenêtres avec respectivement un premier filtre ou émetteur en longueur d'onde 15, une fenêtre ouverte 17 et un seconde filtre ou émetteur en longueur d'onde 16, une pupille 3, une seconde lentille 4 et une matrice de micro-lentilles 9 à laquelle est accolée une matrice de micro-filtres 20.

Tous les composants sont inclus dans des enceintes de protection 18a, 18b, 18c, 18d et 18e et monter sur des rails cylindriques 19 permettant leur translation suivant l'axe longitudinal Z.

On comprend que le procédé qui vient d'être ci-dessus décrit et illustré, l'a été en vue d'une divulgation plutôt que d'une limitation. Bien entendu, divers aménagements, modifications et améliorations pourront être apportés à l'exemple ci-dessus, sans pour autant sortir du cadre de l'invention.

## Revendications

1. Procédé d'amélioration des capacités de détection d'un système d'imagerie multispectrale (10), ledit système d'imagerie multispectrale intégrant un système d'imagerie bi-télécentrique comprenant, suivant une direction longitudinale (axe longitudinal Z), les composants successifs suivants :
- une première lentille (1),
- une pupille (3) située dans le plan focal arrière de ladite première lentille (1),
- une seconde lentille (4) dont la distance focale coïncide avec la position de ladite pupille,
- une matrice de microlentilles (9), de distances focales identiques, située dans le plan focal arrière de ladite seconde lentille (4),
- une matrice de filtres spectraux (20) associée à ladite matrice de microlentilles (9),
- et un détecteur sensible au rayonnement à détecter et situé dans le plan focal arrière de ladite matrice de microlentilles (9),
**caractérisé en ce qu'**il comprend :
- une étape de calibration du système d'imagerie multispectrale, dans laquelle est utilisée une cible de calibration, placée au niveau de la susdite pupille (3), ladite cible de calibration comprenant au moins deux fenêtres, de dimensions transversales au moins égales à celles de ladite pupille (3), lesdites fenêtres pouvant être placées alternativement devant ladite pupille (3) dudit système d'imagerie multispectrale (10), de manière à ce que chaque fenêtre couvre l'ensemble de l'ouverture de ladite pupille (3), ladite première fenêtre contenant un premier panneau (15) duquel provient un rayonnement à une première longueur d'onde située dans le domaine spectral mesurable par ledit détecteur et ladite seconde fenêtre contenant un second panneau (15) duquel provient un rayonnement à une seconde longueur d'onde située dans le domaine spectral mesurable par ledit détecteur,
et une étape d'implémentation d'une gigue contrôlée, c'est-à-dire d'un déplacement d'amplitude et de fréquence fixe, d'au moins un des composants dudit système d'imagerie multispectrale (10), afin d'effectuer une détection synchronisée sur le signal détecté par le susdit détecteur, d'un rayonnement ayant traversé le système d'imagerie multispectrale (10).

2. Procédé d'amélioration selon la revendication 1 dans lequel la cible de calibration de l'étape de calibration du système d'imagerie multispectrale (10) comprend une troisième fenêtre ouverte (17) de manière à laisser passer, sur toute sa surface, sans y apporter de modification, tout rayonnement la traversant.

3. Procédé d'amélioration selon la revendication 1 dans lequel la cible de calibration de l'étape de calibration du système d'imagerie multispectrale (10) comprend une matrice de filtres en longueur d'onde.

4. Procédé d'amélioration selon l'une quelconque des revendications 1 à 3 dans lequel les fenêtres de la cible de calibration de l'étape de calibration du système d'imagerie multispectrale (10) ont des dimensions transversales supérieures à celles de la pupille (3) dudit système d'imagerie.

5. Procédé d'amélioration selon l'une quelconque des revendications 1 à 4 dans lequel la calibration de l'étape de calibration du système d'imagerie multispectrale est une calibration radiométrique.

6. Procédé d'amélioration selon l'une quelconque des revendications 1 à 5 dans lequel la matrice de filtres spectraux (20) dudit système d'imagerie multispectrale est accolée à la matrice de microlentilles (9).

7. Procédé d'amélioration selon l'une quelconque des revendications 1 à 6 dans lequel les deux panneaux (15 et 16) de l'étape de calibration desquels proviennent des rayonnements respectivement à une première et à une deuxième longueurs d'onde font provenir lesdits rayonnement de manière uniforme sur toute leur surface.

8. Procédé d'amélioration selon l'une quelconque des revendications 1 à 7 dans lequel les deux panneaux (15 et 16) de l'étape de calibration desquels proviennent des rayonnements respectivement à une première et à une deuxième longueurs d'onde sont des filtres en longueur d'onde laissant passer respectivement ladite première longueur d'onde et ladite deuxième longueur d'onde.

9. Procédé d'amélioration selon l'une quelconque des revendications 1 à 7 dans lequel les deux panneaux (15 et 16) de l'étape de calibration desquels proviennent des rayonnements respectivement à une première et à une deuxième longueurs d'onde sont des émetteurs émettant respectivement un rayonnement à ladite première longueur d'onde et à ladite deuxième longueur d'onde.

10. Procédé d'amélioration selon l'une quelconque des revendications 1 à 9 dans lequel le détecteur sensible au rayonnement à détecter et situé dans le plan focal arrière de ladite matrice de microlentilles (9) est un détecteur sensible au rayonnement infrarouge.

11. Procédé d'amélioration selon l'une quelconque des revendications 1 à 10 dans lequel la cible de calibration de l'étape de calibration est intégrée à un panneau de support mobile (14) permettant de placer chacune de ses fenêtres ménagées dans ledit panneau (14) alternativement devant la pupille (3) dudit système d'imagerie multispectrale, (10) par translation suivant un axe orthogonal à l'axe longitudinal (Z) du système d'imagerie multispectrale (10).

12. Procédé d'amélioration selon l'une quelconque des revendications 1 à 11, dans lequel le déplacement d'au moins un des composants du système d'imagerie multispectrale (10) de l'étape d'implémentation de la gigue contrôlée est obtenu par l'intégration d'un support mécanique pour ledit élément dont la position peut être modulée par effet piézoélectrique.

13. Procédé d'amélioration selon l'une quelconque des revendications 1 à 12, dans lequel le déplacement de l'étape d'implémentation d'une gigue contrôlée d'au moins un des composants du système d'imagerie multispectrale (10) est effectué sur la première lentille (1) dudit système d'imagerie (10).

14. Procédé d'amélioration selon l'une quelconque des revendications 1 à 12 dans lequel le déplacement de l'étape d'implémentation d'une gigue contrôlée d'au moins un des composants du système d'imagerie multispectrale (10) est effectué sur la deuxième lentille (4) dudit système d'imagerie (10).

15. Procédé d'amélioration selon l'une quelconque des revendications 1 à 12 dans lequel le déplacement de l'étape d'implémentation d'une gigue contrôlée d'au moins un des composants du système d'imagerie multispectrale (10) est effectué sur la matrice de microlentilles (9) dudit système d'imagerie (10).

16. Procédé d'amélioration selon l'une quelconque des revendications 1 à 12 dans lequel le déplacement de l'étape d'implémentation d'une gigue contrôlée d'au moins un des composants du système d'imagerie multispectrale (10) est effectué sur le détecteur dudit système d'imagerie (10).

## Patentansprüche

1. Verfahren zur Verbesserung der Detektionkapazitäten eines multispektralen Bildgebungssystems (10), wobei das multispektrale Bildgebungssystem ein bi-telezentrisches Bildgebungssystem integriert, das entlang einer Längsrichtung (Längsachse Z) die folgenden aufeinanderfolgenden Komponenten umfasst:
- eine erste Linse (1),
- eine Pupille (3), die in der hinteren Brennebene der ersten Linse (1) liegt,
- eine zweite Linse (4), deren Brennweite mit der Position der Pupille übereinstimmt,
- eine Mikrolinsenmatrix (9) mit identischen Brennweiten, die in der hinteren Brennebene der zweiten Linse (4) liegt,
- eine Matrix von Spektralfiltern (20), die mit der Mikrolinsenmatrix (9) assoziiert ist,
- und einen Detektor, der für die zu detektierende Strahlung empfindlich ist und in der hinteren Brennebene der Mikrolinsenmatrix (9) liegt,
**dadurch gekennzeichnet, dass** es umfasst:
- einen Kalibrierungsschritt des multispektralen Bildgebungssystems, bei dem ein Kalibrierungsziel verwendet wird, das im Bereich der Pupille (3) platziert wird, wobei das Kalibrierungsziel mindestens zwei Fenster mit Quermaßen mindestens gleich wie diejenigen der Pupille (3) umfasst, wobei die Fenster alternativ vor der Pupille (3) des multispektralen Bildgebungssystems (10) derart platziert werden können, dass jedes Fenster die gesamte Öffnung der Pupille (3) abdeckt, wobei das erste Fenster eine erste Tafel (15) enthält, von der eine Strahlung mit einer ersten Wellenlänge herrührt, die in dem Spektralbereich liegt, der von dem Detektor messbar ist, und das zweite Fenster eine zweite Tafel (15) enthält, von der eine Strahlung mit einer zweiten Wellenlänge herrührt, die in dem Spektralbereich liegt, der von dem Detektor messbar ist, und einen Umsetzungsschritt eines gesteuerten Jitters, das heißt einer fixen Amplituden- und Frequenzverlagerung mindestens einer der Komponenten des multispektralen Bildgebungssystems (10), um eine synchronisierte Detektion auf dem Signal einer Strahlung, die das multispektrale Bildgebungssystems (10) durchquert hat, die von dem Detektor detektiert wird, auszuführen.

2. Verbesserungsverfahren nach Anspruch 1, wobei das Kalibrierungsziel des Kalibrierungsschritts des multispektralen Bildgebungssystems (10) ein drittes Fenster (17) umfasst, das derart offen ist, dass auf seiner gesamten Oberfläche jede Strahlung, die es durchquert, durchgelassen wird, ohne daran eine Änderung vorzunehmen.

3. Verbesserungsverfahren nach Anspruch 1, wobei das Kalibrierungsziel des Kalibrierungsschritts des multispektralen Bildgebungssystems (10) eine Matrix aus Wellenlängenfiltern umfasst.

4. Verbesserungsverfahren nach einem der Ansprüche 1 bis 3, wobei die Fenster des Kalibrierungsziels des Kalibrierungsschritts des multispektralen Bildgebungssystems (10) Quermaße aufweisen, die größer sind als die der Pupille (3) des Bildgebungssystems.

5. Verbesserungsverfahren nach einem der Ansprüche 1 bis 4, wobei der Kalibrierungsschritt des multispektralen Bildgebungssystems eine radiometrische Kalibrierung ist.

6. Verbesserungsverfahren nach einem der Ansprüche 1 bis 5, wobei die Matrix aus Spezialfiltern (20) des multispektralen Bildgebungssystems an die Mikrolinsenmatrix (9) angefügt ist.

7. Verbesserungsverfahren nach einem der Ansprüche 1 bis 6, wobei die zwei Tafeln (15 und 16) des Kalibrierungsschritts, von welchen Strahlungen jeweils mit einer ersten und einer zweiten Wellenlänge herrühren, die Strahlung gleichmäßig auf ihrer gesamten Oberfläche herrühren lassen.

8. Verbesserungsverfahren nach einem der Ansprüche 1 bis 7, wobei die zwei Tafeln (15 und 16) des Kalibrierungsschritts, von welchen Strahlungen jeweils mit einer ersten und einer zweiten Wellenlänge herrühren, Wellenlängenfilter sind, die jeweils die erste Wellenlänge und die zweite Wellenlänge durchlassen.

9. Verbesserungsverfahren nach einem der Ansprüche 1 bis 7, wobei die zwei Tafeln (15 und 16) des Kalibrierungsschritts, von welchen Strahlungen jeweils mit einer ersten und einer zweiten Wellenlänge herrühren, Sender sind, die jeweils eine Strahlung mit der ersten Wellenlänge und mit der zweiten Wellenlänge emittieren.

10. Verbesserungsverfahren nach einem der Ansprüche 1 bis 9, wobei der für die zu detektierende Strahlung empfindliche Detektor, der in der hinteren Brennebene der Mikrolinsenmatrix (9) liegt, ein für Infrarotstrahlung empfindlicher Detektor ist.

11. Verbesserungsverfahren nach einem der Ansprüche 1 bis 10, wobei das Kalibrierungsziel des Kalibrierungsschritts in eine bewegliche Stütztafel (14) integriert ist, die es erlaubt, jedes ihrer Fenster, die in der Tafel (14) eingerichtet sind, alternativ vor der Pupille (3) des multispektralen Bildgebungssystems (10) durch Verschiebung entlang einer Achse orthogonal zu der Längsachse (Z) des multispektralen Bildgebungssystems (10) zu platzieren.

12. Verbesserungsverfahren nach einem der Ansprüche 1 bis 11, wobei die Verlagerung mindestens einer der Komponenten des multispektralen Bildgebungssystems (10) des Umsetzungsschritts des gesteuerten Jitters durch die Integration eines mechanischen Trägers für das Element, dessen Position durch piezoelektrischen Effekt moduliert werden kann, erhalten wird.

13. Verbesserungsverfahren nach einem der Ansprüche 1 bis 12, wobei die Verlagerung des Umsetzungsschritts eines gesteuerten Jitters mindestens einer der Komponenten des multispektralen Bildgebungssystems (10) auf der ersten Linse (1) des Bildgebungssystems (10) ausgeführt wird.

14. Verbesserungsverfahren nach einem der Ansprüche 1 bis 12, wobei die Verlagerung des Umsetzungsschritts eines gesteuerten Jitters mindestens einer der Komponenten des multispektralen Bildgebungssystems (10) auf der zweiten Linse (4) des Bildgebungssystems (10) ausgeführt wird.

15. Verbesserungsverfahren nach einem der Ansprüche 1 bis 12 wobei die Verlagerung des Umsetzungsschritts eines gesteuerten Jitters mindestens einer der Komponenten des multispektralen Bildgebungssystems (10) auf der Mikrolinsenmatrix (9) des Bildgebungssystems (10) ausgeführt wird.

16. Verbesserungsverfahren nach einem der Ansprüche 1 bis 12 wobei die Verlagerung des Umsetzungsschritts eines gesteuerten Jitters mindestens einer der Komponenten des multispektralen Bildgebungssystems (10) auf dem Detektor des Bildgebungssystems (10) ausgeführt wird.

## Claims

1. Method for improving the detection capacities of a multispectral imaging system (10), said multispectral imaging system including a bi-telecentric imaging system comprising, in a longitudinal direction (longitudinal axis Z), the following successive components:
- a first lens (1),
- a pupil (3) located in the rear focal plane of said first lens (1),
- a second lens (4) the focal length of which coincides with the position of said pupil,
- a micro-lens array (9), of identical focal lengths, located in the rear focal plane of said second lens (4),
- a spectral filter array (20) paired with said micro-lens array (9),
- and a sensor sensitive to the radiation to be detected and located in the rear focal plane of said micro-lens array (9),
**characterized in that** it comprises:
- a step of calibrating the multispectral imaging system, in which a calibration target, placed at the level of the aforesaid pupil (3), is used, said calibration target comprising at least two windows, of transverse dimensions at least equal to those of said pupil (3), said windows being able to be placed alternately in front of said pupil (3) of said multispectral imaging system (10), so that each window covers the entire opening of said pupil (3), said first window containing a first panel (15) from which originates radiation at a first wavelength in the spectral range measurable by said sensor and said second window containing a second panel (15) from which originates radiation at a second wavelength wave in the spectral domain measurable by said sensor, and a step of implementing a controlled jitter, that is to say a shift of fixed amplitude and frequency, of at least one of the components of said multispectral imaging system (10), in order to carry out a detection, synchronized on the signal detected by the aforesaid sensor, of radiation having passed through the multispectral imaging system (10).

2. Method for improving according to claim 1, in which the calibration target of the step of calibrating the multispectral imaging system (10) comprises a third open window (17) so as to let through, over its entire surface, without making any modification thereto, any radiation passing through it.

3. Method for improving according to claim 1, in which the calibration target of the step of calibrating the multispectral imaging system (10) comprises a wavelength filter array.

4. Method for improving according to any one of claims 1 to 3, in which the windows of the calibration target of the calibration step of the multispectral imaging system (10) have transverse dimensions greater than those of the pupil (3) of said imaging system.

5. Method for improving according to any one of claims 1 to 4, in which the calibration at the step of calibrating the multispectral imaging system is a radiometric calibration.

6. Method for improving according to any one of claims 1 to 5, in which the spectral filter array (20) of said multispectral imaging system is adjoined with the micro-lens array (9).

7. Method for improving according to any one of claims 1 to 6, in which the two panels (15 and 16) of the calibration step from which radiation originates respectively at a first and at a second wavelength originate said radiation uniformly over their entire surface.

8. Method for improving according to any one of claims 1 to 7, in which the two panels (15 and 16) of the calibration step from which radiation originates respectively at a first and at a second wavelength are wavelength filters allowing said first wavelength and said second wavelength to pass through respectively.

9. Method for improving according to any one of claims 1 to 7, in which the two panels (15 and 16) of the calibration step from which radiation originates respectively at a first and at a second wavelength are transmitters respectively emitting radiation at said first wavelength and at said second wavelength.

10. Method for improving according to any one of claims 1 to 9, in which the sensor sensitive to the radiation to be detected and located in the rear focal plane of the said micro-lens array (9) is a sensor sensitive to infrared radiation.

11. Method for improving according to any one of claims 1 to 10, in which the calibration target of the calibration step is included into a mobile support panel (14) making it possible to place each of its windows provided in said panel (14) alternately in front of the pupil (3) of said multispectral imaging system (10), by translation along an axis orthogonal to the longitudinal axis (Z) of the multispectral imaging system (10).

12. Method for improving according to any one of claims 1 to 11, in which the displacement of at least one of the components of the multispectral imaging system (10) at the step of implementing the controlled jitter is obtained by the integration of a mechanical support for said element whose position can be modulated by piezoelectric effect.

13. Method for improving according to any one of claims 1 to 12, in which the displacement at the step of implementing a controlled jitter of at least one of the components of the multispectral imaging system (10) is performed on the first lens (1) of said imaging system (10).

14. Method for improving according to any one of claims 1 to 12 in which the displacement at the step of implementing a controlled jitter of at least one of the components of the multispectral imaging system (10) is carried out on the second lens (4) of said imaging system (10).

15. Method for improving according to any one of claims 1 to 12, in which the displacement at the step of implementing a controlled jitter of at least one of the components of the multispectral imaging system (10) is carried out on the micro-lens array (9) of said imaging system (10).

16. Method for improving according to any one of claims 1 to 12, in which the displacement at the step of implementing a controlled jitter of at least one of the components of the multispectral imaging system (10) is carried out on the sensor of said imaging system (10).
